# EUROPEAN PATENT SPECIFICATION

(11) **EP 4 190 478 B1**
(45) Date of publication and mention of the grant of the patent: **10.07.2024**
(21) Application number: 22208752.0
(22) Date of filing: 22.11.2022
(51) Int. Cl.: B23K 26/03, B23K 26/042, B23K 26/082, B23K 26/60, B22F 10/31, G05B 19/00

(54) **APPARATUS AND METHOD FOR LASER MARKING AN OBJECT WITH INTEGRATED SCANNING**
VORRICHTUNG UND VERFAHREN ZUM LASERMARKIEREN EINES OBJEKTES MIT INTEGRIERTEM SCANNER
APPAREIL ET PROCÉDÉ DE MARQUAGE AU LASER D'UN OBJET À BALAYAGE INTEGRÉ

(30) Priority: 23.11.2021 IT 202100029627
(43) Date of publication of application: 07.06.2023
(73) Proprietor: Sisma S.p.A., 36013 Piovene Rocchette (Vicenza) (IT)
(72) Inventor: LOTTO, Davide, 36013 Piovene Rocchette (Vicenza) (IT); CERATO, Davide, 36013 Piovene Rocchette (Vicenza) (IT)
(74) Representative: Anselmi, Davide

(56) References cited:
- EP-A1- 3 165 324
- EP-A1- 3 563 983
- US-A1- 2008 023 455

## Description

The present invention relates to an apparatus for laser processing of an object and a method for laser processing of an object.

At present, laser processing technology is among the most widespread and used processing technologies.

In fact, a good part of precision processing (for example marking, engraving, welding...) is today performed with the aid of a laser beam.

This popularity is due to the extreme precision that the technology enables to be achieved during the processing.

In fact, a laser beam can be collimated and aligned in the exact point in which the processing needs to be performed. Furthermore, the area of action of laser is considerably reduced, thus allowing highly precise processing to be obtained. In particular, the minimum diameter of a laser beam is in the order of a hundredth of a millimetre.

As can be seen in EP3165324A1 (describing all the features and steps of the preamble of claims 1 and 14 respectively) and US2008/023455A1, the above-mentioned laser processing is usually performed with specific apparatus, in which the object to be processed is positioned on a work surface positioned below a laser emitter configured to emit an orientable laser beam. Preferably, the laser beam is substantially aimed along a direction orthogonal to the aforesaid work surface. These apparatuses are equipped with specific devices, so-called "mobile consoles" or "manipulators", residing in which there are controls enabling the use of the functions of the apparatus, such as, for example the movement of the axes on which the laser emitter is mounted or the movement of the work surface.

In particular, the aforesaid apparatuses for laser processing can have substantially two distinct forms of construction: the laser emitter can be mobile relative to the work surface, towards and/or away from and/or along emitter is constrained in a fixed position, whilst the work surface on which the object to be processed is positioned is movable.

In either case, the reciprocal movement between the laser emitter and the work surface is controlled and managed by an operator who is completely or partly present inside the work area and, by using specific controls present on the manipulator, must be able to guide the processing by moving the axes, orienting/positioning the tool, and activating/deactivating the laser emission, and must further be able to continually inspect the processing completed and yet to be performed.

While certain specific processes are being carried out, there may arise a need to perform marking or engraving on three-dimensional objects at different depths.

Disadvantageously, for the execution of such markings or engravings, a 3D model of the object concerned must be provided to the apparatus.

If the geometry of the object is not known or there is no 3D model to be provided to the apparatus, it is necessary to create such a model by means of specific modelling software or using high precision 3D scanning systems external to the marking system, which thus requires the presence of highly specialised personnel.

Furthermore, the object must be accurately positioned inside the work area and aligned with the 3D model so that the laser can perform the processing on the object based on the coordinates contained in the 3D model.

Disadvantageously, the procedure has to be carried out manually by the operator, resulting in inevitable uncertainties and/or errors in positioning and/or alignment.

Particular vision systems aid the operator in the alignment procedure. It should be underscored that this operation is crucial for the successful outcome of the processing.

Disadvantageously, such processing requires, therefore, the presence of highly specialised operators capable of carrying out the procedures of positioning and aligning the object inside the work area.

Disadvantageously, furthermore, such processing makes it necessary to use external hardware and software systems.

Finally, the operator can proceed to enter the graphic elements to be marked on the 3D model of the object and activate the laser.

In this context, the technical task at the basis of the present invention is to propose an apparatus for laser processing of an object and a method for laser processing of an object which overcome the aforementioned drawbacks of the prior art.

In particular, it is an object of the present invention to provide an apparatus for laser processing of an object and a method for laser processing of an object which simplify the processing procedures.

A further object of the present invention is to provide an apparatus for laser processing of an object and a method for laser processing of an object having high operational flexibility.

A further object of the present invention is to provide an apparatus for laser processing of an object and a method for laser processing of an object capable of speeding up the processing procedures.

A further object of the present invention is to provide an apparatus for laser processing capable of carrying out the entire processing procedure without the need for further apparatuses.

The stated technical task and specified objects of the present invention are achieved by an apparatus for laser processing of an object and a method for laser processing of an object according to claims 1 and 14 respectively.

The dependent claims correspond to further embodiments of the the apparatus according to the present invention. Additional features and advantages of the present invention will become more apparent from the approximate, and thus non-limiting, description of a preferred but not exclusive embodiment of an apparatus for laser processing of an object and a method for laser processing of an object as illustrated in the accompanying drawings, in which:
- figure 1 is a perspective representation of an apparatus for laser processing of an object in accordance with the present invention.

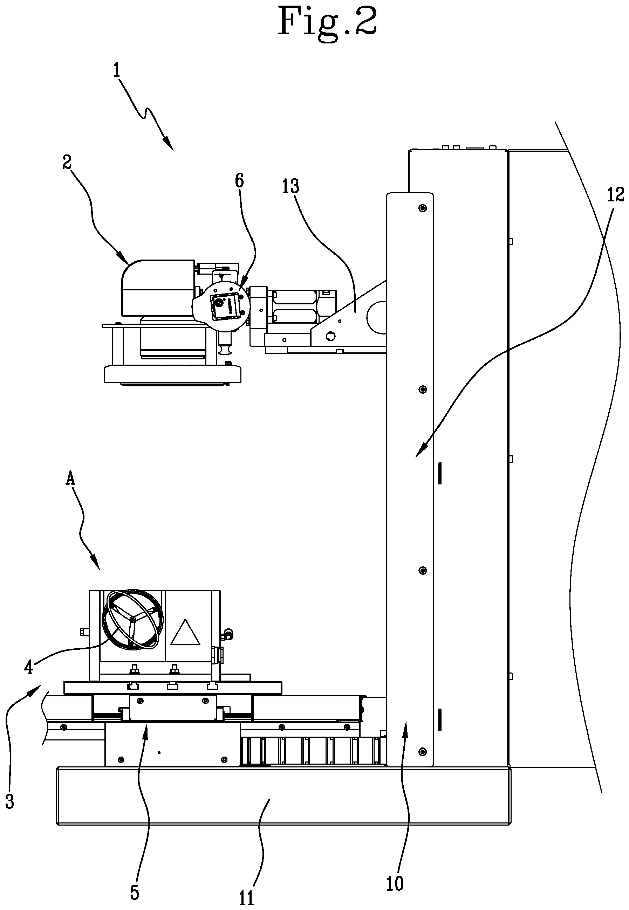

- figure 2 is a side view of the apparatus for laser processing of an object in figure 1;

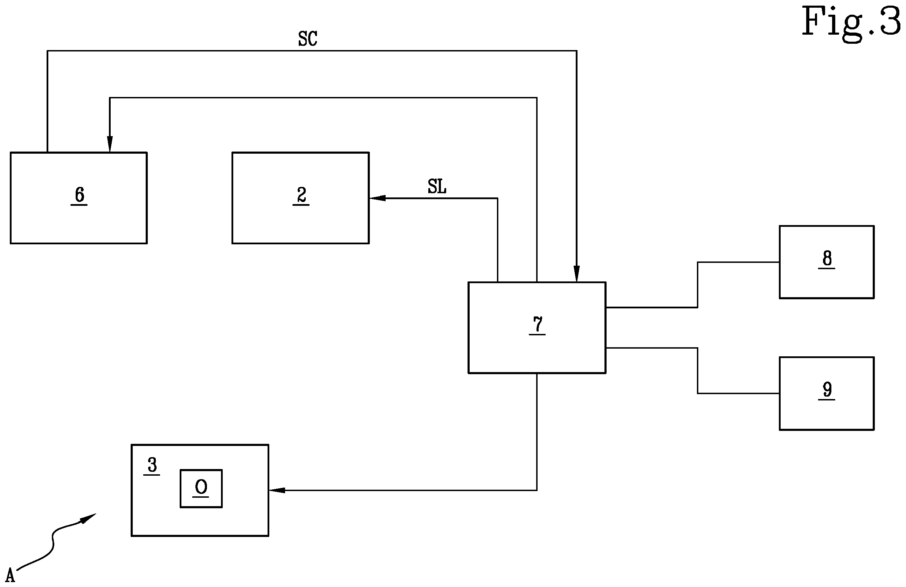

- figure 3 is a schematic representation of an apparatus for laser processing in accordance with the present invention.

With reference to the appended figures, the reference number 1 denotes in its entirety an apparatus for laser processing of an object, which hereinafter will be referred to as the apparatus 1.

The apparatus 1 comprises a workstation defining a work area "A" adapted to at least partially contain one object to be processed "O".

Purely by way of non-limiting example, the object to be processed "O" can be a bracelet, a plate, a ring or another generic object.

Furthermore, the apparatus 1 comprises a laser emitter 2 configured to emit a laser beam towards the work area "A" in order to perform processing, for example marking, on the object to be processed "O".

Advantageously, the laser emitter 2 can be reversibly movable relative to the work area "A", thus guaranteeing high operating flexibility of the apparatus 1 while the processing is taking place.

Furthermore, the laser emitter 2 can comprise a CVS (coaxial vision system) and/or a laser system with an F-Theta lens, thereby guaranteeing high accuracy in the processing and enabling effective processing both on flat portions of the object to be processed and on portions that are curved or define lying planes offset from one another.

Preferably, the apparatus 1 further comprises an optical system operatively connected to the laser emitter 2 to allow a transmission of the aforesaid laser beam towards the work area "A" in order to perform the processing on the object to be processed "O".

Advantageously, the optical system can comprise various kinds of lenses and/or galvanometric mirrors and/or the like, thus ensuring high accuracy in the processing.

The apparatus 1 comprises a holding means 3 configured to hold the object to be processed "O" in a plurality of operating positions inside the work area "A" at least during an operating condition of the apparatus 1.

Advantageously, the holding means 3 comprises a rotating-tilting mandrel 4 configured to constrain the object to be processed "O" and to move it into a plurality of operating positions inside the work area "A".

In this manner, the holding means 3 imparts to the apparatus 1 a high operating flexibility, by enabling an effective orientation of the object to be processed at least relative to the laser emitter 2.

Purely by way of non-limiting example, the rotating-tilting mandrel can bring about rotations of the object to be processed "O" in a wide range of angles, for example 90° rotations, thus imparting high operating flexibility to the apparatus 1.

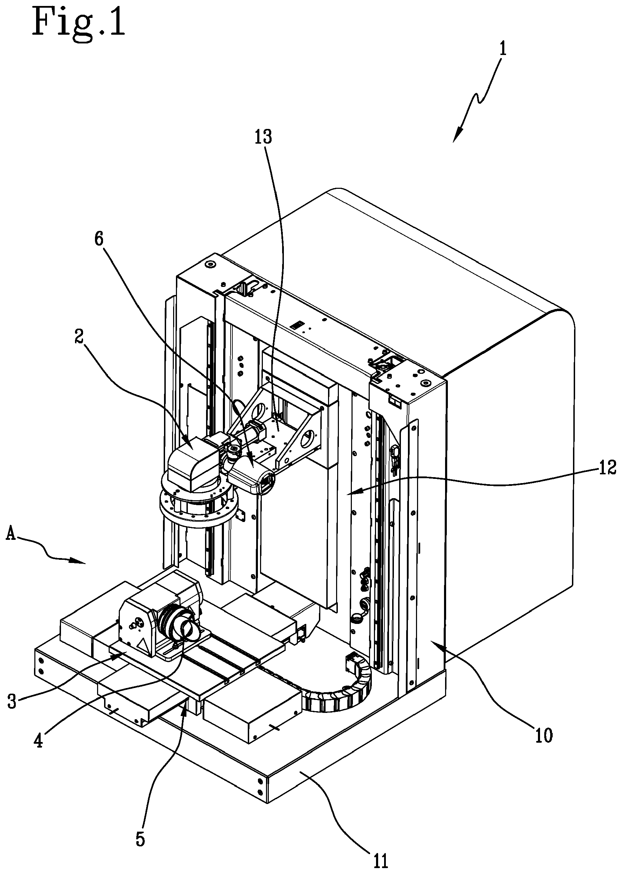

In accordance with a possible embodiment and as illustrated in figure 1, the holding means 3 can comprise a movement guide system 5 configured to enable a movement of the object to be processed inside the work area "A".

Preferably, the movement guide system 5 enables a movement along three movement axes orthogonal to one another.

In other words, the holding means 3 can comprise a three-axis movement guide system 5 configured to constrain the object to be processed "O" and move it into a plurality of operating positions inside the work area "A".

In particular, the rotating-tilting mandrel 4 can be mounted on the movement guide system 5, thus ensuring an effective positioning of the object to be processed inside the work area "A".

For example, the rotating-tilting mandrel 4, together with the movement guide system 5, can guarantee for the holding means 3 at least six degrees of freedom in the positioning of the object to be processed "O".

Advantageously, the apparatus 1 comprises a scanning system 6 integrated into the apparatus 1.

The scanning system 6 is configured to scan at least one portion of the object to be processed "O" and to generate a digital representation of the scanned portion of the object.

In particular, the scanning system 6 is adapted to generate a scanning signal "SC" comprising data related to the digital representation.

In this manner, the scanning system 6 enables, for example, a reconstruction of the shape and/or the positioning of the object to be processed "O" inside the work area "A", thus simplifying and speeding up the process of processing of the object to be processed "O".

For example, the scanning system 6 can enable UV mapping of the object to be processed "O".

More in particular, the scanning system 6 can allow for performing a 3D reconstruction of the object to be processed "O", from which it is possible to compute a UV mapping thereof to simplify the entry of specifications related to the processing of the object "O".

In accordance with a possible embodiment not illustrated in the appended figures, the scanning system 6 can comprise at least one mobile scanning element adapted to scan the at least one portion of the object to be processed "O".

Therefore, the present invention provides an apparatus 1 that is capable both of performing a scan and carrying out laser processing on an object to be processed "O", thus overcoming the need to coordinate a plurality of different machines in order to perform both operations.

In this manner, furthermore, the present invention makes it possible to overcome the need for costly external software and/or hardware in order to obtain the digital model of the object to be processed "O".

Preferably, the aforementioned optical system is operatively connected also to the scanning system 6 to enable and ensure a highly effective scan of the object to be processed "O".

In particular, the optical system can be configured in accordance with a plurality of different operating conditions of the apparatus 1, for example based on the need to perform a scan or processing on the object to be processed "O".

In this manner, the invention shows an increased operating flexibility compared to prior art systems.

Advantageously, the apparatus 1 can further comprise a lighting device operatively connected at least to the scanning system 6 to increase effectiveness at least during a scan of the object to be processed "O".

The apparatus 1 further comprises a control unit 7 configured to receive the scanning signal "SC" and to generate a work signal "SL" representative of a succession of operating instructions for laser processing of the object to be processed "O" on the basis of the data contained in the scanning signal "SC".

Furthermore, the control unit 7 is configured to send the work signal "SL" to the laser emitter 2 and/or to the holding means 3 in order to perform processing on the object to be processed "O" at least on the basis of the data contained in the work signal "SL".

It should be underscored that the control unit 7 can be configured also to control a movement of the holding means 3 at least on the basis of the work signal "SL", thus lending the apparatus 1 a marked operating flexibility.

In particular, the control unit 7 can be operatively connected to the holding means 3 and configured to control the movement of the holding means 3 during a plurality of different operating conditions of the apparatus 1.

In other words, the control unit 7 can be configured to control a movement of the laser emitter 2 and/or of the holding means 3 at least on the basis of the work signal "SL".

Furthermore, the control unit 7 can be configured to reversibly switch the optical system among the aforesaid plurality of operating conditions of the apparatus 1 and/or to control the above-mentioned lighting device.

In this manner, the apparatus 1 enables processing, for example marking, to be performed on the object to be processed "O", for example a bracelet, both on an inner surface and on an outer surface, without the need to modify the connection between the holding means 3 and the object to be processed "O".

Advantageously, the control unit 7 can be operatively connected to the scanning system 6 in order to perform a scan of the at least one portion of the object to be processed.

In particular, the control unit 7 can be configured to activate the holding means 3 so as to move the object to be processed "O" at least between a first operating position and a second operating position at least during an operating configuration of the scanning system 6, on the basis of one or more operating parameters.

In this manner, the apparatus 1 ensures the possibility of scanning the object to be processed "O" from a plurality of different angles and/or viewpoints which enable a highly accurate digital reconstruction of the object.

In particular, the apparatus 1 overcomes the need for highly qualified operators to carry out the scanning operations and makes it possible to increase the accuracy of the digital reconstruction by virtue of the automation of the procedure, which is thus free of any errors and/or uncertainties due, for example, to the positioning and/or securing of the object to be processed inside the work area "A".

Preferably, the control unit 7 is further configured to control the scanning system 6 and/or the movement of the aforesaid at least one mobile scanning element on the basis of the above-mentioned at least one operating parameter.

Advantageously, the control unit 7 is configured to activate the holding means 3, and the movement of the rotating-tilting mandrel, both during the operation of the scanning system 6 and during the operation of the laser emitter 2, thus ensuring a marked operating flexibility of the apparatus 1.

In this manner, the apparatus 1 enables a scan and high precision processing to be performed both externally and internally, for example inside cavities defined by the object to be processed "O".

For example, the control unit 7 can be configured to activate the holding means 3 so as to render visible to the scanning system 6 and/or to the laser emission system 2 cavities of the object to be processed "O" which would otherwise not be visible, in order to be able to scan and engrave them.

It is noted that the control unit 7 can be configured to generate the aforesaid work signal "SL" on the basis of the data contained in the scanning signal "SC" and at least one predetermined operating parameter.

For example, the at least one operating parameter can comprise a graphic pattern and/or a texture to be created on the object to be processed and/or a previously acquired scanning signal.

Advantageously, the apparatus 1 can comprise a storage medium 8 operatively connected to the control unit 7 and/or to the scanning system in order to save at least the scanning signal "SC" and/or at least one operating parameter.

Furthermore, the apparatus 1 can comprise a user interface module 9 configured to permit the entry and/or modification of the aforesaid at least one operating parameter on the part of at least one user.

Preferably, the control unit 7 can be connected wirelessly at least to the laser emitter 2 and/or to the holding means 3, thereby limiting the overall volume due to the presence of physical connection means.

Advantageously, the control unit 7 can be configured to compare the content of the scanning signal with the content of a pre-loaded signal representative at least of the scanned portion of the object.

For example, the pre-loaded signal may have been previously acquired through a scan performed by the scanning system 6.

Advantageously, the control unit 7 can be configured to determine a positioning of the scanned portion of the object inside the work area "A" and to generate the work signal "SL" at least on the basis of that positioning.

In other words, the control unit 7 enables the work signal "SL" to be generated based on the position of the object to be processed "O" obtained by using the scanning system 6.

It should be underscored that the scanning system 6 can enable the performance of a scan and, therefore, a complete reconstruction of the object to be processed "O".

Furthermore, on the basis of that positioning and/or of a comparison between that positioning and the content of a pre-loaded signal, the control unit 7 can be configured to move the laser emitter 2 and/or the holding means 3 in order to optimise the processing procedures.

In this manner, the apparatus 1 overcomes the need for long, laborious operations of alignment between the object to be processed and the digital model which characterise prior art systems. In particular, the apparatus 1 can perform a substantially automated alignment between the object to be processed and the digital model thanks to the possibility of moving the holding means 3. Furthermore, the apparatus 1 overcomes the need to perform the aforesaid alignment by generating a work signal "SL", which, by taking account of the positioning of the object to be processed, defines a movement of the laser emitter 2 and of the holding means 3 in order to perform the processing.

In accordance with a possible, purely illustrative embodiment as shown in figure 1, the apparatus 1 can comprise a support frame 10 having a base 11 at least partially delimiting the work area "A" from below and, preferably, configured to at least partially support the holding means 3. Furthermore, the frame 10 can comprise an upright 12 at least partially laterally delimiting the work area "A" and a support body 13 at least partially projecting from the upright 12.

In particular, the support body 13 is configured to at least partially support the laser emitter 2 and/or the scanning system 6 so that the laser emitter 2 and/or the scanning system 6 are at least partially facing the work area "A".

Furthermore, the support body 13 can be configured to support the optical system and/or the lighting device so that the optical system and/or the lighting device are at least partially facing the work area "A".

In accordance with a further aspect, the present invention refers to a method for laser processing of an object comprising the steps of providing an object to be subjected to processing at least partially inside a work area "A" and providing a laser emitter 2 configured to emit a laser beam towards the work area "A" in order to perform processing on the object to be processed "O".

Advantageously, the method comprises a step of scanning at least one portion of the object to be processed "O" once positioned inside the work area "A" and generating a digital representation of the at least one scanned portion of the object.

In other words, the method can enable a reconstruction of the shape and/or the positioning of the object to be processed "O" inside the work area "A", thus simplifying and speeding up the process of processing the object to be processed "O".

The method further comprises a step of generating a scanning signal "SC" comprising data related to the aforesaid digital representation.

Furthermore, the method comprises a step of processing the scanning signal "SC" and generating a work signal "SL" identifying a succession of operating instructions on the basis of the scanning signal "SC" and at least one operating parameter.

For example, the at least one operating parameter can comprise a graphic pattern and/or a texture to be created on the object to be processed and/or a previously acquired scanning signal.

Preferably, the method comprises a step of setting and/or modifying the above-mentioned at least one operating parameter, making it possible, for example, to modify the type of processing to be performed on the object to be processed "O".

Advantageously, the method can comprise a step of memorising at least the scanning signal "SC" and/or the at least one operating parameter.

In this manner, the method makes it possible to save the scanning signals "SC" and/or the operating parameters, for example, of one or more processing operations, so as to be able to use them for subsequent processing, for example, similar processing or for performing a series of identical processing operations on a plurality of objects to be processed, thus simplifying the entire processing and making it faster.

Very advantageously, furthermore, the method can comprise a step of comparing the scanning signal "SC" with a pre-loaded and/or previously memorised signal identifying at least the scanned portion of the object and determining a positioning of the at least one scanned portion of the object inside the work area "A".

In particular, the aforesaid step of processing the scanning signal "SC" and generating a work signal "SL" can be performed at least on the basis of that positioning.

In other words, the method can enable the work signal "SL" to be generated based on the position of the object to be processed "O" during the scanning step.

Furthermore, the method can enable the laser emitter 2 and/or the object to be processed "O" to be moved on the basis of that positioning and/or a comparison between that positioning and the content of a pre-loaded and/or previously memorised signal in order to optimise the processing procedure.

In this manner, the method overcomes the need for the long, laborious operations of alignment between the object to be processed and the digital model which characterise prior art systems.

Advantageously, the method can even overcome the need to perform the aforesaid alignment by generating a work signal "SL", which, by taking account of the positioning of the object to be processed, defines a movement of the laser emitter 2 and/or of the object to be processed "O" in order to perform the processing.

In particular, the method comprises a step of activating the laser emitter 2 on the basis of the work signal "SL".

For example, the method can comprise a step of moving the laser emitter 3 relative to the work area "A" on the basis of the work signal "SL".

In other words, the laser emitter 2 can be reversibly moved relative to the work area "A", thus guaranteeing high operating flexibility while the processing is taking place.

Preferably, the method can comprise a step of moving the object to be processed "O" into a plurality of operating positions inside the work area "A".

The step of moving the object to be processed is performed at least during the step of scanning at least one portion of the object to be processed "O" and the step of activating the laser emitter 2.

In this manner, the method enables the object to be processed "O" to be scanned from a plurality of different angles and/or viewpoints which enable a highly accurate digital reconstruction of the object.

Advantageously, the method in accordance with the present invention can be applied to any apparatus equipped with a laser emitter, preferably comprising a CVS (coaxial vision system) and/or a laser system with an F-Theta lens, and a rotating-tilting mandrel.

In accordance with a possible, purely illustrative and non-limiting embodiment, the method can comprise a step of providing an apparatus 1 in accordance with what has been previously described and performing at least the scanning step, the data processing step and/or the activating step by means of the apparatus 1.

It may be observed, therefore, that the present invention achieves the proposed objects by providing an apparatus for laser processing of an object and a method for laser processing of an object capable of simplifying the processing procedure by virtue of the presence of a control unit configured to move the laser emitter and/or the object to be processed on the basis of the signal of a scanning system, integrated into the apparatus, comprising data related to a digital representation of the scanned portion of the object.

Advantageously, the present invention makes it possible to speed up and increase the accuracy of processing by automating the procedure of alignment between the object to be processed and the digital model.

In this manner, the present invention overcomes the need to use highly specialised operators and external hardware or software - in particular for carrying out the alignment operations - in order to perform the aforesaid processing, thus contributing, moreover, to limiting production costs.

Advantageously, the present invention enables a plurality of processing operations to be performed on objects whose geometry is unknown and/or irregular by producing, in a short time, a digital model that represents it and activating the laser emitter and/or moving the object to be processed on the basis of that digital model.

### List of alphanumeric references:

1. apparatus
2. laser emitter
3. holding means
4. rotating-tilting mandrel
5. movement guide system
6. scanning system
7. control unit
8. storage medium
9. user interface module
10. support frame
11. base
12. upright
13. support body
A. work area
O. object to be processed
SC. scanning signal
SL. work signal

## Claims

1. An apparatus (1) for laser processing of an object, comprising:
- a workstation defining a work area (A) adapted to at least partially contain one object to be processed (O);
- a laser emitter (2) configured to emit a laser beam towards said work area (A) in order to perform processing on the object to be processed (O);
- a holding means (3) configured to hold the object to be processed (O) in a plurality of operating positions inside said work area (A) at least during an operating condition of said apparatus (1);
the apparatus being **characterised by** the following:
- a scanning system (6) integrated into the apparatus (1) and configured to scan at least one portion of the object to be processed (O) and to generate a digital representation of the scanned portion of the object, said scanning system (6) being adapted to generate a scanning signal (SC) comprising data related to said digital representation;
- the holding means (3) comprising a rotating-tilting mandrel (4) configured to constrain the object to be processed (O) and to move it into a plurality of operation positions inside said work area (A);
- a control unit (7) configured to:
- receive said scanning signal (SC) and generate a work signal (SL) representative of a succession of operating instructions for laser processing of the object to be processed (O) on the basis of the data contained in said scanning signal (SC);
- send said work signal (SL) to said laser emitter (2) and to said holding means (3) in order to perform said processing on the object to be processed (O) at least on the basis of the data contained in said work signal (SL);
- activate the movement of the holding means (3) and the rotating-tilting mandrel (4), both during the operation of the scanning system (6) and during the operation of the laser emitter (2).

2. The apparatus in accordance with claim 1, wherein said holding means (3) comprises a three-axis movement guide system (5) configured to constrain the object to be processed (O) and move it into a plurality of operating positions inside said work area (A).

3. The apparatus in accordance with one or more of the preceding claims, wherein said control unit (7) is operatively connected to said holding means (3), said control unit (7) being configured to control the movement of said holding means (3) during a plurality of different operating conditions of said apparatus (1).

4. The apparatus in accordance with one or more of the preceding claims, wherein said control unit (7) is further configured to generate said work signal (SL) on the basis of the data contained in said scanning signal (SC) and/or at least one predetermined operating parameter, said operating parameter preferably comprising a graphic pattern and/or a texture to be created on the object to be processed (O) and/or a previously acquired scanning signal (SC).

5. The apparatus in accordance with claim 4, comprising a user interface module (9) configured to permit the entry and/or modification of said at least one operating parameter on the part of at least one user.

6. The apparatus in accordance with one or more of claims 4-5, wherein said control unit (7) is operatively connected to said scanning system (6) in order to perform a scan of the at least one portion of the object to be processed (O); and wherein said control unit (7) is configured to activate said holding means (3) so as to move the object to be processed (O) at least between a first operating position and a second operating position at least during an operating configuration of the scanning system (6), on the basis of said at least one operating parameter.

7. The apparatus in accordance with one or more of the preceding claims, wherein said control unit (7) is configured to:
- compare the content of said scanning signal (SC) with the content of a pre-loaded signal representative at least of the scanned portion of the object;
- determine a positioning of the scanned portion of the object inside said work area (A);
- generate said work signal (SL) at least on the basis of said positioning.

8. The apparatus in accordance with one or more of the preceding claims, comprising a storage medium (8) operatively connected to said control unit (7) and/or to said scanning system (6) in order to save at least said scanning signal (SC) and/or said at least one operating parameter.

9. The apparatus in accordance with one or more of the preceding claims, wherein said scanning system (6) comprises at least one mobile scanning element adapted to scan the at least one portion of the object to be processed (O); and wherein said control unit (7) is configured to control a movement of said at least one mobile scanning element on the basis of said at least one operating parameter.

10. The apparatus in accordance with one or more of the preceding claims, wherein said laser emitter (2) is reversibly movable relative to said work area (A); and wherein said control unit (7) is configured to control a movement of said laser emitter (2) and/or said holding means (3) at least on the basis of said work signal (SL).

11. The apparatus in accordance with one or more of the preceding claims, wherein said laser emitter (2) comprises a CVS (coaxial vision system) and/or a laser system with an F-Theta lens.

12. The apparatus in accordance with one or more of the preceding claims, comprising an optical system operatively connected to said laser emitter (2) to permit a transmission of said laser beam towards said work area (A) in order to perform said processing on the object to be processed (O); and wherein said optical system is operatively connected also to said scanning system (6) to enable scanning of the object to be processed (O).

13. The apparatus in accordance with one or more of the preceding claims, comprising a support frame (10) having:
- a base (11) at least partially delimiting said work area (A) from below and configured to at least partially support said holding means (3);
- an upright (12) at least partially laterally delimiting said work area (A);
- a support body (13) at least partially projecting from said upright (12) and configured to at least partially support said laser emitter (2) and said scanning system (6) so that said laser emitter (2) and said scanning system (6) are at least partially facing said work area (A).

14. A method for laser processing of an object, comprising the steps of:
- providing an object to be subjected to processing at least partially inside a work area (A);
- providing a laser emitter (2) configured to emit a laser beam towards said work area (A) in order to perform processing on the object to be processed (O);
and the method being **characterised by** the following:
- scanning at least one portion of the object to be processed (O) once positioned in said work area (A) and generating a digital representation of the at least one scanned portion of the object;
- generating a scanning signal (SC) comprising data related to said digital representation;
- processing said scanning signal (SC) and generating a work signal (SL) identifying a succession of operating instructions on the basis of said scanning signal (SC) and at least one operating parameter;
- activating said laser emitter (2) on the basis of said work signal (SL); and being further
**characterised in that** a rotating-tilting mandrel (4) constrains the object to be processed (O) and moves it into a plurality of operating positions inside said work area (A); said scanning step and said step of activating said laser emitter (2) being performed during said movement carried out by the rotating-tilting mandrel (4).

## Patentansprüche

1. Vorrichtung (1) zur Laserbearbeitung eines Objektes, umfassend:
- eine Arbeitsstation, die einen Arbeitsbereich (A) definiert, der dazu eingerichtet ist, mindestens teilweise ein zu bearbeitendes Objekt (O) zu enthalten;
- einen Laseremitter (2), der ausgelegt ist, um einen Laserstrahl in Richtung des Arbeitsbereichs (A) zu emittieren, um eine Bearbeitung an dem zu bearbeitenden Objekt (O) durchzuführen;
- Haltemittel (3), die ausgelegt sind, um das zu bearbeitende Objekt (O) mindestens während eines Betriebszustands der Vorrichtung (1) in einer Vielzahl von Betriebspositionen innerhalb des Arbeitsbereichs (A) zu halten;
wobei die Vorrichtung durch Folgendes gekennzeichnet ist:
- ein Abtastsystem (6), das in die Vorrichtung (1) integriert und ausgelegt ist, um mindestens einen Abschnitt des zu bearbeitenden Objekts (O) abzutasten und eine digitale Darstellung des abgetasteten Abschnitts des Objekts zu erzeugen, wobei das Abtastsystem (6) dazu eingerichtet ist, ein Abtastsignal (SC) zu erzeugen, das Daten umfasst, die sich auf die digitale Darstellung beziehen;
- wobei die Haltemittel (3) einen rotierenden und kippbaren Dorn (4) umfassen, der ausgelegt ist, um das zu bearbeitende Objekt (O) festzuhalten und es in eine Vielzahl von Betriebspositionen innerhalb des Arbeitsbereichs (A) zu bewegen;
- eine Steuereinheit (7), die ausgelegt ist, um:
- das Abtastsignal (SC) zu empfangen und ein Arbeitssignal (SL) zu erzeugen, das für eine Abfolge von Betriebsanweisungen für die Laserbearbeitung des zu bearbeitenden Objekts (O) auf der Grundlage der Daten repräsentativ ist, die in dem Abtastsignal (SC) enthalten sind;
- das Arbeitssignal (SL) zu dem Laseremitter (2) und den Haltemitteln (3) zu senden, um die Bearbeitung an dem zu bearbeitenden Objekt (O) mindestens auf der Grundlage der Daten, die in dem Arbeitssignal (SL) enthalten sind, durchzuführen;
- die Bewegung der Haltemittel (3) und des rotierenden und kippbaren Dorns (4) sowohl während des Betriebs des Abtastsystems (6) als auch während des Betriebs des Laseremitters (2) zu aktivieren.

2. Vorrichtung nach Anspruch 1, wobei die Haltemittel (3) ein dreiachsiges Bewegungsführungssystem (5) umfassen, das ausgelegt ist, um das zu bearbeitende Objekt (O) festzuhalten und es in eine Vielzahl von Betriebspositionen innerhalb des Arbeitsbereichs (A) zu bewegen.

3. Vorrichtung nach einem oder mehreren der vorhergehenden Ansprüche, wobei die Steuereinheit (7) mit den Haltemitteln (3) betriebswirksam verbunden ist, wobei die Steuereinheit (7) ausgelegt ist, um die Bewegung der Haltemittel (3) während einer Vielzahl unterschiedlicher Betriebsbedingungen der Vorrichtung (1) zu steuern.

4. Vorrichtung nach einem oder mehreren der vorhergehenden Ansprüche, wobei die Steuereinheit (7) ferner dazu ausgelegt ist, um das Arbeitssignal (SL) auf der Grundlage der Daten, die in dem Abtastsignal (SC) enthalten sind, und/oder mindestens einen vorgegebenen Betriebsparameter zu erzeugen, wobei der Betriebsparameter vorzugsweise ein grafisches Muster und/oder eine Textur, das oder die auf dem zu bearbeitenden Objekt (O) erzeugt werden soll, und/oder ein Abtastsignal (SC), das zuvor erfasst wurde, umfasst.

5. Vorrichtung nach Anspruch 4, umfassend ein Benutzerschnittstellenmodul (9), das ausgelegt ist, um die Eingabe und/oder Änderung des mindestens einen Betriebsparameters durch mindestens einen Benutzer zu ermöglichen.

6. Vorrichtung nach einem oder mehreren der Ansprüche 4-5, wobei die Steuereinheit (7) betriebswirksam mit dem Abtastsystem (6) verbunden ist, um ein Abtasten des mindestens einen Abschnitts des zu bearbeitenden Objekts (O) durchzuführen; und wobei die Steuereinheit (7) ausgelegt ist, um die Haltemittel (3) zu aktivieren, um das zu bearbeitende Objekt (O) mindestens zwischen einer ersten Betriebsposition und einer zweiten Betriebsposition mindestens während einer Betriebsauslegung des Abtastsystems (6) auf der Grundlage des mindestens einen Betriebsparameters zu bewegen.

7. Vorrichtung nach einem oder mehreren der vorhergehenden Ansprüche, wobei die erste Steuereinheit (7) ausgelegt ist, um:
- den Inhalt des Abtastsignals (SC) mit dem Inhalt eines vorgeladenen Signals zu vergleichen, das für mindestens den abgetasteten Abschnitt des Objektes repräsentativ ist;
- eine Positionierung des abgetasteten Abschnitts des Objektes innerhalb des Arbeitsbereichs (A) zu bestimmen;
- das Arbeitssignal (SL) mindestens auf der Grundlage der Positionierung zu bestimmen.

8. Vorrichtung nach einem oder mehreren der vorhergehenden Ansprüche, umfassend ein Speichermedium (8), das mit der Steuereinheit (7) und/oder mit dem Abtastsystem (6) betriebswirksam verbunden ist, um mindestens das Abtastsignal (SC) und/oder den mindestens einen Betriebsparameter zu speichern.

9. Vorrichtung nach einem oder mehreren der vorhergehenden Ansprüche, wobei das Abtastsystem (6) mindestens ein bewegliches Abtastelement umfasst, das eingerichtet ist, um mindestens einen Abschnitt des zu bearbeitenden Objekts (O) abzutasten; und wobei die Steuereinheit (7) ausgelegt ist, um eine Bewegung des mindestens einen beweglichen Abtastelements auf der Grundlage des mindestens einen Betriebsparameters zu steuern.

10. Vorrichtung nach einem oder mehreren der vorhergehenden Ansprüche, wobei der Laseremitter (2) relativ zu dem Arbeitsbereich (A) reversibel bewegbar ist; und wobei die Steuereinheit (7) ausgelegt ist, um eine Bewegung des Laseremitters (2) und/oder der Haltemittel (3) mindestens auf der Grundlage des Arbeitssignals (SL) zu steuern.

11. Vorrichtung nach einem oder mehreren der vorhergehenden Ansprüche, wobei der Laseremitter (2) ein CVS-Sichtsystem (Coaxial Vision System) und/oder ein Lasersystem mit einer F-Theta-Linse umfasst.

12. Vorrichtung nach einem oder mehreren der vorhergehenden Ansprüche, umfassend ein optisches System, das mit dem Laseremitter (2) betriebswirksam verbunden ist, um eine Übertragung des Laserstrahls in Richtung des Arbeitsbereichs (A) zu ermöglichen, um die Bearbeitung an dem zu bearbeitenden Objekt (O) durchzuführen; und wobei das optische System auch mit dem Abtastsystem (6) betriebswirksam verbunden ist, um ein Abtasten des zu bearbeitenden Objekts (O) zu ermöglichen.

13. Vorrichtung nach einem oder mehreren der vorhergehenden Ansprüche, umfassend einen Tragrahmen (10), der aufweist:
- eine Basis (11), die mindestens teilweise den Arbeitsbereich (A) von unten begrenzt und ausgelegt ist, um mindestens teilweise die Haltemittel (3) zu tragen;
- einen Ständer (12), der mindestens teilweise seitlich den Arbeitsbereich (A) begrenzt;
- einen Tragkörper (13), der mindestens teilweise von dem Ständer (12) vorsteht und ausgelegt ist, um den Laseremitter (2) und das Abtastsystem (6) mindestens teilweise zu tragen, so dass der Laseremitter (2) und das Abtastsystem (6) mindestens teilweise dem Arbeitsbereich (A) zugewandt sind.

14. Verfahren zur Laserbearbeitung eines Objektes, umfassend die Schritte:
- Bereitstellen eines Objektes, das der Bearbeitung mindestens teilweise innerhalb des Arbeitsbereichs (A) zu unterziehen ist;
- Bereitstellen eines Laseremitters (2), der ausgelegt ist, um einen Laserstrahl in Richtung des Arbeitsbereichs (A) zu emittieren, um eine Bearbeitung an dem zu bearbeitenden Objekt (O) durchzuführen;
und wobei das Verfahren durch Folgendes gekennzeichnet ist:
- Abtasten mindestens eines Abschnitts des zu bearbeitenden Objekts (O), sobald es in dem Arbeitsbereich (A) positioniert wurde, und Erzeugen einer digitalen Darstellung des mindestens einen abgetasteten Abschnitts des Objekts;
- Erzeugen eines Abtastsignals (SC), das Daten umfasst, die sich auf die digitale Darstellung beziehen;
- Verarbeiten des Abtastsignals (SC) und Erzeugen eines Arbeitssignals (SL), das eine Abfolge von Betriebsanweisungen auf der Grundlage des Abtastsignals (SC) und mindestens eines Betriebsparameters identifiziert;
- Aktivieren des Laseremitters (2) auf der Grundlage des Arbeitssignals (SL);
und ferner **dadurch gekennzeichnet ist, dass** ein rotierender und kippbarer Dorn (4) das zu bearbeitende Objekt (O) festhält und es in eine Vielzahl von Betriebspositionen innerhalb des Arbeitsbereichs (A) bewegt; wobei der Schritt des Abtastens und der Schritt des Aktivierens des Laseremitters (2) während der Bewegung ausgeführt werden, die von dem rotierenden und kippbaren Dorn (4) durchgeführt wird.

## Revendications

1. Appareil (1) de traitement au laser d'un objet, comprenant :
- un poste de travail définissant une zone de travail (A) adaptée pour contenir au moins partiellement un objet à traiter (O) ;
- un émetteur laser (2) configuré pour émettre un faisceau laser vers ladite zone de travail (A) afin d'effectuer un traitement sur l'objet à traiter (O) ;
- des moyens de maintien (3) configurés pour maintenir l'objet à traiter (O) dans une pluralité de positions de fonctionnement à l'intérieur de ladite zone de travail (A) au moins pendant une condition de fonctionnement dudit appareil (1) ;
l'appareil étant **caractérisé par** ce qui suit :
- un système de balayage (6) intégré dans l'appareil (1) et configuré pour balayer au moins une portion de l'objet à traiter (O) et pour générer une représentation numérique de la portion balayée de l'objet, ledit système de balayage (6) étant adapté pour générer un signal de balayage (SC), comprenant des données relatives à ladite représentation numérique ;
- les moyens de maintien (3) comprenant un mandrin de rotation-inclinaison (4) configuré pour contraindre l'objet à traiter (O) et pour le déplacer dans une pluralité de positions de fonctionnement à l'intérieur de ladite zone de travail (A) ;
- une unité de contrôle (7) configurée pour :
- recevoir ledit signal de balayage (SC) et générer un signal de travail (SL) représentatif d'une succession d'instructions de fonctionnement pour le traitement au laser de l'objet à traiter (O) sur la base des données contenues dans ledit signal de balayage (SC) ;
- envoyer ledit signal de travail (SL) audit émetteur laser (2) et auxdits moyens de maintien (3) afin d'effectuer ledit traitement sur l'objet à traiter (O) au moins sur la base des données contenues dans ledit signal de travail (SL) ;
- activer le mouvement des moyens de maintien (3) et du mandrin de rotation-inclinaison (4), à la fois pendant le fonctionnement du système de balayage (6) et pendant le fonctionnement de l'émetteur laser (2).

2. Appareil selon la revendication 1, dans lequel lesdits moyens de maintien (3) comprennent un système de guidage de mouvement à trois axes (5) configuré pour contraindre l'objet à traiter (O) et le déplacer dans une pluralité de positions de fonctionnement à l'intérieur de ladite zone de travail (A).

3. Appareil selon une ou plusieurs des revendications précédentes, dans lequel ladite unité de commande (7) est fonctionnellement connectée auxdits moyens de maintien (3), ladite unité de commande (7) étant configurée pour commander le mouvement desdits moyens de maintien (3) pendant une pluralité de conditions de fonctionnement différentes dudit appareil (1).

4. Appareil selon une ou plusieurs des revendications précédentes, dans lequel ladite unité de commande (7) est en outre configurée pour générer ledit signal de travail (SL) sur la base des données contenues dans ledit signal de balayage (SC) et/ou au moins un paramètre de fonctionnement prédéterminé, ledit paramètre de fonctionnement comprenant de préférence un motif graphique et/ou une texture à créer sur l'objet à traiter (O) et/ou un signal de balayage (SC) précédemment acquis.

5. Appareil selon la revendication 4, comprenant un module d'interface utilisateur (9) configuré pour permettre l'entrée et/ou la modification dudit au moins un paramètre de fonctionnement de la part d'au moins un utilisateur.

6. Appareil selon une ou plusieurs des revendications 4-5, dans lequel ladite unité de commande (7) est connectée de manière fonctionnelle audit système de balayage (6) afin d'effectuer un balayage de ladite au moins une portion de l'objet à traiter (O) ; et dans lequel ladite unité de commande (7) est configurée pour activer lesdits moyens de maintien (3) de manière à déplacer l'objet à traiter (O) au moins entre une première position de fonctionnement et une seconde position de fonctionnement au moins pendant une configuration de fonctionnement du système de balayage (6), sur la base dudit au moins un paramètre de fonctionnement.

7. Appareil selon une ou plusieurs des revendications précédentes, dans lequel ladite unité de commande (7) est configurée pour :
- comparer le contenu dudit signal de balayage (SC) avec le contenu d'un signal préchargé représentatif au moins de la portion balayée de l'objet ;
- déterminer un positionnement de la portion balayée de l'objet à l'intérieur de ladite zone de travail (A) ;
- générer ledit signal de travail (SL) au moins sur la base dudit positionnement.

8. Appareil selon une ou plusieurs des revendications précédentes, comprenant un support de stockage (8) connecté de manière fonctionnelle à ladite unité de commande (7) et/ou audit système de balayage (6) afin de sauvegarder au moins ledit signal de balayage (SC) et/ou ledit au moins un paramètre de fonctionnement.

9. Appareil selon une ou plusieurs des revendications précédentes, dans lequel ledit système de balayage (6) comprend au moins un élément de balayage mobile adapté pour balayer ladite au moins une portion de l'objet à traiter (O) ; et dans lequel ladite unité de commande (7) est configurée pour commander un mouvement dudit au moins un élément de balayage mobile sur la base dudit au moins un paramètre de fonctionnement.

10. Appareil selon une ou plusieurs des revendications précédentes, dans lequel ledit émetteur laser (2) est mobile de manière réversible par rapport à ladite zone de travail (A) ; et dans lequel ladite unité de commande (7) est configurée pour commander un mouvement dudit émetteur laser (2) et/ou desdits moyens de maintien (3) au moins sur la base dudit signal de travail (SL).

11. Appareil selon une ou plusieurs des revendications précédentes, dans lequel ledit émetteur laser (2) comprend un CVS (coaxial vision system) et/ou un système laser avec une lentille F-Theta.

12. Appareil selon une ou plusieurs des revendications précédentes, comprenant un système optique fonctionnellement connecté audit émetteur laser (2) pour permettre une transmission dudit faisceau laser vers ladite zone de travail (A) afin d'effectuer ledit traitement sur l'objet à traiter (O) ; et dans lequel ledit système optique est fonctionnellement connecté également audit système de balayage (6) pour permettre le balayage de l'objet à traiter (O).

13. Appareil selon une ou plusieurs des revendications précédentes, comprenant un cadre de support (10) ayant :
- une base (11) délimitant au moins partiellement ladite zone de travail (A) par le bas et configurée pour supporter au moins partiellement lesdits moyens de maintien (3) ;
- un montant (12) délimitant latéralement au moins partiellement ladite zone de travail (A) ;
- un corps de support (13) faisant au moins partiellement saillie dudit montant (12) et configuré pour supporter au moins partiellement ledit émetteur laser (2) et ledit système de balayage (6) de sorte que ledit émetteur laser (2) et ledit système de balayage (6) soient au moins partiellement en face de ladite zone de travail (A).

14. Procédé de traitement laser d'un objet, comprenant les étapes consistant à :
- fournir un objet à être soumis au traitement au moins partiellement à l'intérieur d'une zone de travail (A) ;
- fournir un émetteur laser (2) configuré pour émettre un faisceau laser vers ladite zone de travail (A) afin d'effectuer un traitement sur l'objet à traiter (O) ; et le procédé étant **caractérisé par** ce qui suit :
- balayer au moins une portion de l'objet à traiter (O) une fois positionné dans ladite zone de travail (A) et générer une représentation numérique de l'au moins une portion balayée de l'objet ;
- générer un signal de balayage (SC), comprenant des données relatives à ladite représentation numérique ;
- traiter ledit signal de balayage (SC) et générer un signal de travail (SL) identifiant une succession d'instructions de fonctionnement sur la base dudit signal de balayage (SC) et d'au moins un paramètre de fonctionnement ;
- activer ledit émetteur laser (2) sur la base dudit signal de travail (SL) ;
et étant en outre **caractérisé en ce qu'**un mandrin de rotation-inclinaison (4) contraint l'objet à traiter (O) et le déplace dans une pluralité de positions de fonctionnement à l'intérieur de ladite zone de travail (A) ; ladite étape de balayer et ladite étape d'activer ledit émetteur laser (2) étant effectuées pendant ledit mouvement effectué par le mandrin de rotation-inclinaison (4).
